# DEMANDE DE BREVET EUROPEEN

(11) **EP 3 537 594 A1**
(43) Date de publication de la demande: **11.09.2019**
(21) Numéro de dépôt: 18160979.3
(22) Date de dépôt: 09.03.2018
(51) Int. Cl.: H02N 2/10, H02N 2/00, G04C 3/12

(54) **MOTEUR PIEZOELECTRIQUE ROTATIF A PRECONTRAINTE RADIALE**

(71) Demandeur: ETA SA Manufacture Horlogère Suisse, 2540 Grenchen (CH)
(72) Inventeur: Lagorgette, Pascal, 2502 Bienne (CH); Meyer, Pascal, 2000 Neuchâtel (CH)
(74) Mandataire: ICB SA

(57) **Abrégé**

L'invention se rapporte à un moteur piézoélectrique rotatif (100 ; 101 ; 102) comprenant :
- un actionneur piézoélectrique comportant un résonateur (30') comprenant une paire de bras (31', 32') connectés à l'une de leurs extrémités au niveau d'une zone de connexion (33'), les deux autres extrémités (310', 320') étant dites libres,
- un élément passif comprenant une partie cylindrique (20) s'étendant orthogonalement au résonateur (30'), la partie cylindrique (20) étant apte à être mise en rotation par friction des extrémités libres (310', 320') des bras (31', 32') sur la partie cylindrique (20),
chaque extrémité libre (310', 320') comprenant une saillie (41, 42) telle que les saillies (41, 42) s'étendent l'une vers l'autre et forment à elles deux un logement pour une portion (21) de la partie cylindrique (20),
le moteur (100 ; 101 ; 102) comprenant un dispositif de maintien (51, 52 ; 60) de la portion (21) de la partie cylindrique (20) dans le logement.

## Description

### Domaine de l'invention

L'invention se rapporte au domaine technique des moteurs piézoélectriques rotatifs.

### Arrière-plan de l'invention

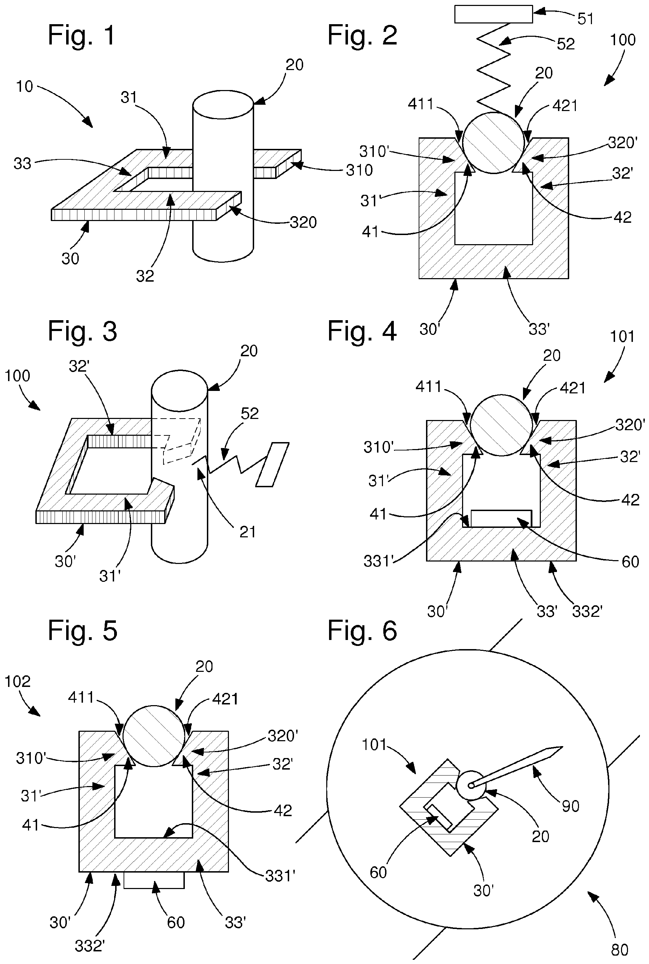

Un moteur piézoélectrique rotatif comporte classiquement un élément passif et un actionneur permettant de mettre en rotation l'élément passif en utilisant l'effet piézoélectrique. En référence à la figure 1, on connait en particulier les moteurs piézoélectriques 10 rotatifs pour lesquels l'élément passif comporte un cylindre 20 et l'actionneur piézoélectrique comporte un résonateur 30 formé d'une paire de bras 31, 32 connectés l'un à l'autre au niveau d'une zone de connexion 33, sensiblement en forme de diapason ou de U. L'actionneur piézoélectrique comporte en outre deux éléments piézoélectriques (non représentés), chacun attaché à l'un des bras 31, 32, et jouant le rôle de moyens d'excitation des bras pour leur imposer des vibrations. L'élément passif 20 passe entre les bras 31, 32 du résonateur 30. Plus précisément, une région de la surface latérale de l'élément passif 20 est en contact de part et d'autre avec les extrémités libres 310, 320 des bras 31, 32, de sorte que l'élément passif 20 soit mis en rotation par friction des extrémités libres 310, 320 des bras 31, 32 sur la région de contact.

Un moteur de ce type nécessite une précontrainte (aussi appelée précharge) à l'interface entre le résonateur et la partie cylindrique, pour fixer le couple de maintien sans alimentation du moteur, c'est-à-dire sans excitation des bras.

### Résumé de l'invention

Le but de la présente invention est de proposer un moteur piézoélectrique rotatif équipé d'un système de précontrainte.

A cet effet, l'invention se rapporte à un moteur piézoélectrique rotatif comprenant :
- un actionneur piézoélectrique comportant un résonateur comprenant une paire de bras connectés à l'une de leurs extrémités au niveau d'une zone de connexion, les deux autres extrémités étant dites libres,
- un élément passif comprenant une partie cylindrique s'étendant orthogonalement au résonateur, la partie cylindrique étant apte à être mise en rotation par friction des extrémités libres des bras sur la partie cylindrique,
chaque extrémité libre comprenant une saillie telle que les saillies s'étendent l'une vers l'autre et forment à elles deux un logement pour une portion de la partie cylindrique,
le moteur comprenant un dispositif de maintien de la portion de la partie cylindrique dans le logement.

Par saillie, on entend un élément qui forme relief, qui dépasse, une avancée.

Selon l'invention, une précontrainte radiale est réalisée entre la partie cylindrique et le résonateur : une force radiale est générée par l'intermédiaire du dispositif de maintien pour maintenir la partie cylindrique contre les saillies se trouvant à chaque extrémité des bras du résonateur. Le terme « radial » fait référence à un rayon de la partie cylindrique.

Le système de précontrainte est donc formé des saillies et du dispositif de maintien.

Dans un premier mode de réalisation, le dispositif de maintien est apte à générer une force élastique s'appliquant sur la portion de la partie cylindrique. Par exemple, le dispositif de maintien comporte un élément de fixation, et un élément élastique, par exemple un ressort, une lame ou un élément caoutchouteux, d'une part fixé à l'élément de fixation et d'autre part en appui contre la portion de la partie cylindrique.

Dans un deuxième mode de réalisation, le dispositif de maintien est apte à générer une force magnétique s'appliquant sur la portion de la partie cylindrique. Par exemple, le dispositif de maintien comporte un aimant fixé à la zone de connexion des bras, la portion de la partie cylindrique comprenant un matériau magnétique, par exemple un matériau ferromagnétique, de sorte à créer une force d'attraction entre la portion de la partie cylindrique et l'aimant. On note qu'un avantage du deuxième mode de réalisation de l'invention par rapport au premier est que le système de précontrainte est autoporté. Un autre avantage est que la partie cylindrique peut tourner librement sans subir de frottements dus au contact avec l'élément élastique.

Dans un mode de réalisation, le dispositif de maintien est apte à générer une force sensiblement parallèle aux bras du résonateur. Dans le cas où le dispositif de maintien comporte un élément élastique tel qu'un ressort, alors l'axe dudit élément élastique est sensiblement parallèle aux bras du résonateur. Dans le cas où le dispositif de maintien comporte un aimant, alors ledit aimant est disposé à distance sensiblement égale des extrémités libres des bras.

L'invention se rapporte également à une pièce d'horlogerie comportant un moteur piézoélectrique tel que détaillé ci-dessus.

Dans un mode de réalisation non limitatif, la pièce d'horlogerie comporte une aiguille fixée à une extrémité de la partie cylindrique.

### Description sommaire des dessins

D'autres particularités et avantages ressortiront clairement de la description qui en est faite ci-après, à titre indicatif et nullement limitatif, en référence aux dessins annexés, dans lesquels :
- la figure 1, déjà décrite, représente schématiquement une partie d'un moteur piézoélectrique rotatif selon l'art antérieur, vue de côté,
- la figure 2 représente schématiquement une partie d'un moteur piézoélectrique rotatif selon un premier mode de réalisation de l'invention, vue de dessus,
- la figure 3 représente schématiquement la partie du moteur piézoélectrique rotatif de la figure 2, vue de côté,
- la figure 4 représente schématiquement une partie d'un moteur piézoélectrique rotatif selon un deuxième mode de réalisation de l'invention, vue de dessus,
- la figure 5 représente schématiquement une partie d'un moteur piézoélectrique rotatif selon un troisième mode de réalisation de l'invention, vue de dessus,
- la figure 6 représente schématiquement une partie d'une pièce d'horlogerie comprenant le moteur piézoélectrique rotatif de la figure 4 et une aiguille fixée audit moteur.

### Description détaillée des modes de réalisation préférés

Les figures 2 et 3 montrent une partie d'un moteur piézoélectrique 100 selon un premier mode de réalisation de l'invention, la figure 4 montre un moteur piézoélectrique 101 selon un deuxième mode de réalisation de l'invention, et la figure 5 montre un moteur piézoélectrique 102 selon un troisième mode de réalisation de l'invention. Dans les trois cas, le moteur 100, 101, 102 comporte un élément passif comprenant une partie cylindrique 20, et un actionneur piézoélectrique permettant de mettre en rotation la partie cylindrique 20 en utilisant l'effet piézoélectrique.

L'actionneur piézoélectrique comporte des moyens d'excitation piézoélectrique, non représentés, et un résonateur 30' comprenant deux bras 31', 32' aptes à osciller. Les moyens d'excitation sont avantageusement constitués de deux parties, chacune attachée à un bras différent. Toutefois, d'autres modes de réalisation des moyens d'excitation sont possibles, ils peuvent par exemple être constitués d'une seule partie disposés au niveau d'une jointure entre les bras. Lors de l'application d'une tension adaptée aux moyens d'excitation, les moyens d'excitation se déforment, et des contraintes mécaniques sont transmises aux bras 31', 32' qui se mettent alors à osciller. Par une conception et un montage appropriés des moyens d'excitation sur les bras, des oscillations multidimensionnelles de forme souhaitée peuvent être réalisées.

Les bras 31', 32' sont connectés au niveau d'une zone de connexion 33', et s'étendent sensiblement parallèlement l'un à l'autre depuis ladite zone de connexion 33'. Le résonateur a donc globalement une forme de diapason, c'est-à-dire une forme de U. Toutefois, cette forme n'est pas limitative. Les extrémités des bras non connectées à la zone de connexion 33', sont dites extrémités libres 310', 320'. L'amplitude des oscillations des bras 31', 32' est maximale à ces extrémités 310', 320'.

La partie cylindrique 20 s'étend sensiblement orthogonalement au résonateur 30', c'est-à-dire orthogonalement au plan contenant les axes des bras 31', 32' du résonateur 30', et est en contact avec les deux extrémités libres 310', 320'. Les oscillations multidimensionnelles des extrémités libres 310', 320' des bras 31', 32' permettent d'imposer une rotation à la partie cylindrique 20 autour de son axe par frottement desdites extrémités 310', 320' contre ladite partie cylindrique 20.

Les extrémités libres 310', 320' ont une géométrie particulière permettant, en combinaison avec un dispositif de maintien du moteur piézoélectrique décrit plus loin, de créer une précontrainte entre le résonateur 30' et la partie cylindrique 20. Plus précisément, chaque extrémité libre 310', 320' comprend une saillie 41, 42 telle que les saillies 41, 42 s'étendent l'une vers l'autre. Chaque saille 41, 42 présente une face inclinée 411, 421 de sorte à former à elles deux un logement. La partie cylindrique 20 est en contact avec les faces inclinées 411, 421 de ces saillies 41, 42. Autrement dit, une portion 21 de la partie cylindrique 20 (visible à la figure 3) est calée dans le logement formé par les faces inclinées 411, 421. Le dispositif de maintien permet d'appliquer une force de pression sur ladite portion 21, de direction parallèle aux bras 31', 32' et dans le sens de la zone de connexion 33', pour que la portion 21 appuie sur ces faces inclinées 411, 421.

Dans le premier mode de réalisation, le dispositif de maintien comporte un élément élastique, ici un ressort 52, et une butée 51. Le ressort 52 est tel qu'il appuie d'un côté sur la portion 21 et de l'autre côté sur la butée 51 de sorte à pousser la partie cylindrique 20 contre les faces inclinées 411, 421.

Dans le deuxième et le troisième mode de réalisation, le dispositif de maintien comporte un aimant 60 positionné du côté de la zone de connexion 33', et la portion 21 comporte un matériau magnétique, par exemple un matériau ferromagnétique, de sorte à attirer la portion 21 en direction de l'aimant 60, et par conséquent contre les faces inclinées 411, 421. Dans le deuxième mode de réalisation, l'aimant 60 est fixé à une face interne 331 de la zone de connexion 33', alors que dans le troisième mode de réalisation, l'aimant 60 est fixé à une face externe 332 de la zone de connexion 33'. On appelle face interne 331 la face située en vis de la partie cylindrique 20, et face externe 332 la face opposée à la face interne 331.

Enfin, la figure 6 montre une pièce d'horlogerie 80 de type montre-bracelet, comprenant une aiguille 90 fixée à l'extrémité supérieure de la partie cylindrique 20 du moteur piézoélectrique 101 selon le deuxième mode de réalisation. Toutefois, le moteur piézoélectrique selon un des modes de réalisation de l'invention pourrait être utilisé pour entrainer en rotation non pas une aiguille, mais un disque (par exemple un disque des quantièmes ou un disque de phase de lune), une roue ou encore un anneau.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées. Par exemple, les faces inclinées 411, 421 ont été représentées planes dans les modes de réalisation représentées, mais elles pourraient tout à fait être concaves ou encore convexes. Ce qui importe est que ces faces soient maintenues en contact avec la portion 21 de la partie cylindrique 20.

## Revendications

1. Moteur piézoélectrique rotatif (100 ; 101 ; 102) comprenant :
- un actionneur piézoélectrique comportant un résonateur (30') comprenant une paire de bras (31', 32') connectés à l'une de leurs extrémités au niveau d'une zone de connexion (33'), les deux autres extrémités (310', 320') étant dites libres,
- un élément passif comprenant une partie cylindrique (20) s'étendant orthogonalement au résonateur (30'), la partie cylindrique (20) étant apte à être mise en rotation par friction des extrémités libres (310', 320') des bras (31', 32') sur la partie cylindrique (20),
chaque extrémité libre (310', 320') comprenant une saillie (41, 42) telle que les saillies (41, 42) s'étendent l'une vers l'autre et forment à elles deux un logement pour une portion (21) de la partie cylindrique (20),
le moteur (100 ; 101 ; 102) comprenant un dispositif de maintien (51, 52 ; 60) de la portion (21) de la partie cylindrique (20) dans le logement.

2. Moteur piézoélectrique (100) selon la revendication précédente, dans lequel le dispositif de maintien (51, 52) est apte à générer une force élastique s'appliquant sur la portion (21) de la partie cylindrique (20).

3. Moteur piézoélectrique (100) selon la revendication 2, dans lequel le dispositif de maintien (51, 52) comporte un élément de fixation (51), et un élément élastique (52) d'une part fixé à l'élément de fixation (51) et d'autre part en appui contre la portion (21) de la partie cylindrique (20).

4. Moteur piézoélectrique (100) selon la revendication 3, dans lequel l'axe dudit élément élastique (52) est sensiblement parallèle aux bras (31', 32') du résonateur (30').

5. Moteur piézoélectrique (101 ; 102) selon la revendication 1, dans lequel le dispositif de maintien (60) est apte à générer une force magnétique s'appliquant sur la portion (21) de la partie cylindrique (20).

6. Moteur piézoélectrique (101 ; 102) selon la revendication 5, dans lequel le dispositif de maintien (60) comporte un aimant (60) fixé à la zone de connexion (33') des bras (31', 32'), la portion (21) de la partie cylindrique (20) comprenant un matériau magnétique de sorte à créer une force d'attraction entre la portion (21) de la partie cylindrique (20) et l'aimant (60).

7. Moteur piézoélectrique (101 ; 102) selon la revendication 6, ledit aimant (60) étant disposé à distance sensiblement égale des extrémités libres (310', 320') des bras (31', 32').

8. Pièce d'horlogerie (80) comportant un moteur piézoélectrique (100 ; 101 ; 102) selon l'une des revendications précédentes.

9. Pièce d'horlogerie (80) selon la revendication précédente, comportant une aiguille (90) fixée à une extrémité de la partie cylindrique (20).
